# EUROPÄISCHE PATENTSCHRIFT

(11) **EP 0 907 397 B1**
(45) Veröffentlichungstag und Bekanntmachung des Hinweises auf die Patenterteilung: **08.03.2000**
(21) Anmeldenummer: 97929162.2
(22) Anmeldetag: 11.06.1997
(51) Int. Cl.: B01D 29/21, B01D 29/58, B01D 29/90, B01D 63/06

(54) **FILTRATIONSEINHEIT MIT EINEM PATRONENARTIGEN FILTERELEMENT**
FILTRATION UNIT WITH A CARTRIDGE-LIKE FILTER ELEMENT
UNITE DE FILTRATION AVEC ELEMENT FILTRE DE TYPE CARTOUCHE

(30) Priorität: 29.06.1996 DE 19626196
(43) Veröffentlichungstag der Anmeldung: 14.04.1999
(73) Patentinhaber: SARTORIUS AG, 37075 Göttingen (DE)
(72) Erfinder: REULECKE, Fritz, D-37139 Adelebsen (DE)
(86) Internationale Anmeldenummer: EP9703028
(87) Internationale Veröffentlichungsnummer: WO9800220

(56) Entgegenhaltungen:
- EP-A- 0 239 666
- DE-B- 1 166 555
- GB-A- 587 721
- US-A- 4 244 820

## Beschreibung

Die Erfindung betrifft eine Filtrationseinheit mit einem patronenartigen Filterelement zur Filtration von Fluiden.
Die Filtrationseinheit ist beispielsweise in Form von Filterkerzen oder Filtercapsulen in der chemischen, elektronischen, pharmazeutischen, kosmetischen, biotechnologischen, Getränke- und Lebensmittelindustrie, in Labors sowie im Umweltschutzbereich verwendbar. In Abhängigkeit von der Filterbestückung des patronenartigen Filterelements kann die Filtrationseinheit z.B. für die Vor- und Endfiltration im Bereich der Reversosmose, Ultra- und Mikrofiltration unterschiedlicher Medien, einschließlich der Sterilfiltration eingesetzt werden.
Patronenartige Filtrationseinheiten sind bekannt. Bei solchen Filtrationseinheiten ist das patronenartige Filterelement in einem umschließenden Gehäuse so angeordnet, daß es das Gehäuse in ein- und auslaßseitige Gehäuseräume trennt und das zu filtrierende Medium bestimmungsgemäß das Filter passieren muß, wobei es vom einlaß- in den auslaßseitigen Gehäuseraum gelangt. Das patronenartige Filterelement besteht aus einem rohrförmigen Filter, welches an seinen Enden zur Abdichtung Dichtelemente beispielsweise in Form von Kappen, Verankerungselementen, Polymerschmelzen etc. trägt, die sich quer dazu erstrecken und die Stirnseiten des rohrförmigen Filters einbetten. Dabei besitzt wenigstens eines der Dichtelemente eine Öffnung zur Zu- oder Abführung von Fluid. Als Filter sind Tiefenfilter, z.B. Vliese und Oberflächenfilter, z.B. Filtermembranen im Reversosmose-, Ultra- und Mikrofiltrationsmereich einzeln oder in Kombination miteinander gebräuchlich. Sie können in gewickelter und/oder plissierter Form mit oder ohne Drainagen vorliegen. Damit die Filter in diesen patronenartigen Filterelementen den hohen mechanischen Belastungen während der Filtrations-, Reinigungs- und Sterilisationsoperationen schadlos widerstehen, insbesondere höheren Druckdifferenzen, Druckstößen und Temperaturänderungen, und die Filtrationseinheiten eine lange Lebensdauer aufweisen, werden die patronenartigen Filterelemente mit besonderen Sicherungselementen ausgestattet. So ist es üblich, sie im Innern mit einem fluiddurchlässigen Stützkern zu versehen, an dessen Außenseite sich die rohrförmigen Filter abstützen. Außen werden sie mit einer fluiddurchlässigen Rückstausicherung ausgestattet, an dessen Innenseite sich die rohrförmigen Filter ebenfalls abstützen. Stützkern, Rückstausicherung und rohrförmiger Filter sind von den Dichtelementn des patronenartigen Filterelements eingefaßt. Das patronenartige Filterelement wird entweder über gesondert angebrachte Adapter oder direkt über die mit der Öffnung versehene Dichtelement mit mindestens einem Fluidanschluß des Gehäuses verbunden.

Die US-A-4 244 820 offenbart eine Crossflow-Filtrationseinheit mit einem patronenartigen Filterelement, dessen plissiertes Filter aus einer undurchlässigen Folie, einem Gewebe und einer Membran besteht, wobei zwischen Folie und Membran ein dünner Überströmungskanal für die zu filtrierende Flüssigkeit gebildet wird. Das sich in diesem Kanal befindliche Gewebe soll durch Turbulenzen dafür sorgen, daß die Membranoberfläche nicht durch Ablagerungen vorschnell verblockt.
Nach der in EP-A-239 666 dargestellten Crossflow-Filtrationseinheit soll eine Verblockung der Filteroberfläche dadurch vermieden werden, daß das zu filtrierende Fluid die Filteroberfläche in einer Vorkammer überströmt, die in Überströmrichtung einen abnehmenden Querschnitt aufweist. Dadurch soll die Abnahme der Überströmungsgeschwindigkeit ausgegelichen werden, die dadurch eintritt, daß sich das Volumen an überströmender Flüssigkeit durch abgehendes Filtrat vermindert.
Gemäß der DE-AS-11 66 555 sorgt ein Dralleinsatz im Überströmungskanal dafür, daß grobe Verunreinigungen eines durch ein Sieb zu filtrierenden Schmieröls vom Sieb weg an die Gehäusewand gedrückt wird, um so eine Verblockung des Siebes zu vermeiden. In der GB-A-587 721 wird das Schmieröl dazu über einen spiralförmigen Verwirbler geleitet, der sich in einem Ringspalt zwischen zylindrischem Filterelement und Gehäusewand befindet.

Nachteilig ist die Vielzahl der Bauteile, die zu einer Filtrationseinheit zusammengefügt werden müssen und der damit verbundene hohe arbeits- und kostenintensive Aufwand. Nachteilig ist auch das relativ große Totvolumen zwischen dem patronenartigen Filterelement und dem Gehäuse der Filtrationseinheit. Außerdem ist das patronenartige Filterelement im Gehäuse genau zu zentrieren, andernfalls herrschen unterschiedliche Strömungsverhältnisse zwischen Filterelement und Gehäusewand, die zu einer vorzeitigen Verblockung von Teilen des Filterelementes führen.

Der Erfindung liegt daher die Aufgabe zugrunde, eine mechanisch belastbare Filtrationseinheit mit einem von einem Gehäuse umschlossenen rohrförmigen Filterelement aus einer verringerten Anzahl von Bauteilen zu schaffen, die über gleichmäßige Strömungsverhältnisse zwischen Filterelement und Gehäusewand bei geringem Totvolumen verfügt.

Die Aufgabe wird durch eine Filtrationseinheit mit einem patronenartigen Filterelement ohne gesonderte Rückstausicherung gelöst, welches in einem umschließenden Gehäuse angeordnet ist, wobei sich an der Innenseite der rohrförmigen Gehäusewand Strömungskanäle befinden, die mit mindestens einem Fluidanschluß in kommunizierender Verbindung stehende und an dessen Stege sich die rohrförmigen Filter des patronenartigen Filterelements abstützen.
Dadurch, daß sich das rohrförmige Filter des patronenartigen Filterelements an den Stegen der Strömungskanäle abstützt, ist es nicht erforderlich, die patronenartigen Filterelemente mit einer gesonderten Rückstausicherung zu versehen. Durch Variation von Form und Breite der Strömungskanäle und der Stege zwischen den
Strömungskanälen, kann sowohl die Anströmung als auch die Stützfunktion an die Eigenschaften der verwendeten Filtermaterialien induviduell angepaßt werden, was zu einer größeren Filtrationsleistung, verlängerten Standzeit und Lebensdauer der Filtrationseinheit führt.
In einer bevorzugten Ausführungsform der Erfindung wird durch einen helixartigen Verlauf der Strömungskanäle verhindert, daß das Filtermaterial bei einer Filtration oder Rückspülung von innen nach außen, durch Quellung, durch Rückstoß oder im Falle der Verwendung plissierter Filtermaterialien die Faltenkanten in die Strömungskanäle gedrückt werden und diese blockieren.
Bei einer statisch betriebenen Filtrationseinheit (Dead-End-Filtration) hat es sich für eine hohe Standzeit der Filtrationseinheit als besonders wirksam erwiesen, wenn die Strömungskanäle so ausgeprägt sind, daß die Summe der Querschnitte der Strömungskanäle gleich dem Querschnitt der mit ihnen in kommunizierender Verbindung stehenden Fluidanschlüsse für die Zufuhr des zu filtrierenden Mediums ist. Bei einer dynamisch betriebenen Filtrationseinheit (Crossflow-Filtration), bei der über die Strömungskanäle hinweg die Anströmung des patronenartigen Filterelements mit dem Feedstrom erfolgt, hat es sich für eine hohe Standzeit der Filtrationseinheit als besonders wirksam erwiesen, wenn die Strömungskanäle so ausgeprägt sind, daß die Summe der Querschnitte der Strömungskanäle kleiner ist als der Querschnitt der mit ihnen in kommunizierender Verbindung stehenden Fluidanschlüsse für die Feedzufuhr an zu filtrierendem Medium.
In einer weiteren vorteilhaften Ausführungsform der Erfindung bildet der Stützkern für das rohrförmige Filter des patronenartigen Filterelements einen festen Bestandteil des als Gehäusedeckel ausgebildeten zweiten Gehäuseteils. Dadurch, daß der Stützkern zusammen mit dem Gehäusedeckel als ein einziges Spritzgußteil herstellbar ist, wird die Anzahl der einzelnen Bauteile der Filtrationseinheit weiter reduziert. Der Stützkern wird beim Zusammenfügen der beiden Gehäseteile der Filtrationseinheit durch das mit einer Öffnung versehene Dichtelement in das patronenartige Filterelement eingeführt und übernimmt die Abstützung der rohrförmigen Filter an seinem Außenumfang, wobei der Außenumfang des Stützkerns kleiner als der Innenumfang des rohrförmigen Filters sein muß.
Zur Verbindung mit dem ersten Gehäuseteil und dem patronenartigen Filterelement verfügt der Gehäusedeckel über zwei ringförmige Materialkonturen, über die fluiddichte Verbindungen mit dem ersten Gehäuseteil am Außenumfang des Gehäuses und mit der Dichtelement in dem Bereich, durch den sich der Stützkern erstreckt, realisiert wird. Dabei ist es vorteilhaft, wenn das zu verbindende erste Gehäuseteil und die Dichtelement des patronenartigen Filterelements über komplementäre Materialkonturen verfügt.
Die fluiddichten Verbindungen können mit den üblichen Fügetechniken hergestellt werden, wie beispielsweise Kleben oder Schweißen, wobei im Falle der Verwendung von Kunststoffen das Reib-, Heizelement- oder Ultraschallschweißen bevorzugt ist.

Die Erfindung wird anhand der Figuren 1 bis 3 näher erläutert.
Dabei zeigen
- Fig. 1: eine erfindungsgemäße Filtrationseinheit für die dynamische Filtration,
- Fig. 2: einen Schnitt durch die rohrförmige Gehäusewand des ersten Gehäuseteils mit Strömungskanälen und
- Fig. 3: eine perspektivische Darstellung einer erfindungsgemäßen Filtrationseinheit, bei der ein Teil der rohrförmigen Gehäusewand entfernt wurde.

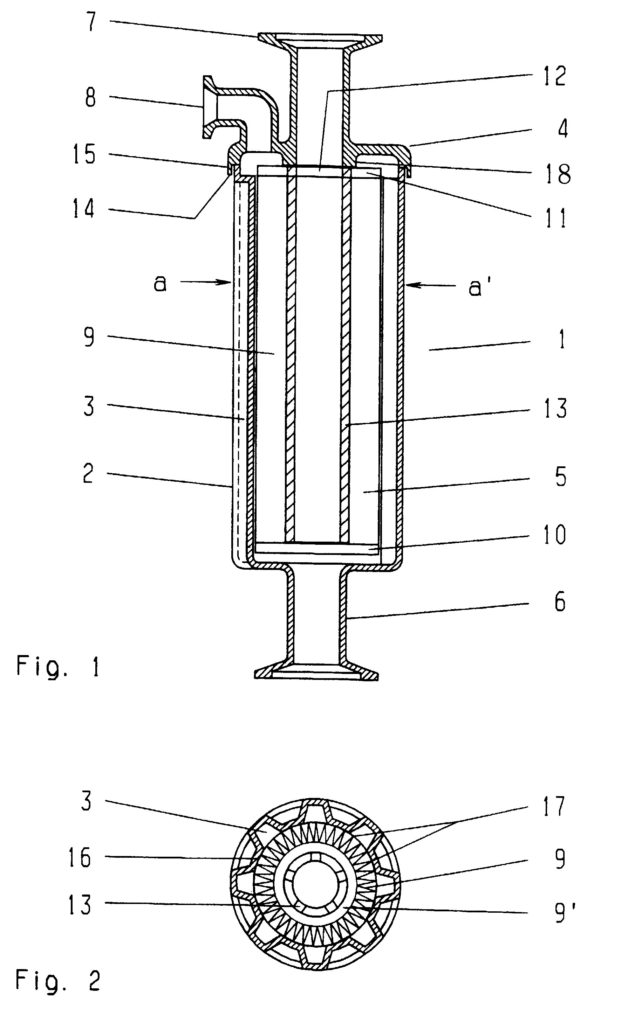

Gemäß Fig. 1 besteht die Filtrationseinheit **1** aus einem ersten Gehäuseteil **2** mit Strömungskanälen **3** an der Innenseite der Gehäusewand, aus einem zweiten Gehäuseteil **4**, das als Gehäusedeckel ausgebildet ist, und aus einem in dem Gehäuse angeordneten patronenartigen Filterelement **5**. Die Gehäuseteile **2** und **4** besitzen die Fluidanschlüsse **6, 7** und **8**. Das patronenartige Filterelement **5** besteht aus rohrförmigen Filtern **9**, welche an ihren Enden Dichtelementn **10** und **11** tragen, die sich quer dazu erstrecken und die Stirnseiten der rohrförmigen Filter **9** fluiddicht einbetten. Das Dichtelement **11** besitzt eine Öffnung **12**, durch die sich ein rohrförmiger Stützkern **13** erstreckt, der fester Bestandteil des Gehäusedeckels **4** ist und mit dem Fluidanschluß **7** kommunizierend verbunden ist. Die beiden Gehäuseteile wurden über entsprechende Materialkonturen **14** und **15** fluiddicht zu dem Gehäuse zusammengefügt. Eine weitere Materialkontur **18** des Gehäusedeckels befindet sich am Austrittsschaft seines Stützkerns und verbindet fluiddicht den Fluidanschluß **7** mit dem patronenartigen Filterelement **5** über das Dichtelement **11**.
Beim Crossflow-Betrieb wird das zu filtrierende Medium über den über den Fluidanschluß **6** in den einlaßseitigen Gehäuseraum eingespeist, überströmt entlang der Strömungskanäle **3** das rohrförmige Filter **9** und verläßt als Retentat über den Fluidanschluß **8** die Filtrationseinheit **1**. Das Filtrat, das das rohrförmige Filter **9** passiert hat, wird im fluiddurchlässigen Stützkern **13** gesammelt und über den Fluidanschluß **7** aus der Filtrationseinheit abgeführt. Bei der statischen Filtration verfügt die Filtrationseinheit **1** nur über die Fluidanschlüsse **6** und **7**.
In Fig. 2 ist ein Schnitt durch die Filtrationseinheit **1** entlang der Schnittlinie a - a' in Fig. 1 dargestellt. Er zeigt eine der möglichen Formen der Strömungskanäle **3** und der Stege **16**, an denen sich die äußeren Faltenkanten **17** des rohrförmigen Filters **9** abstützen. In der Fig. 2 sind zwei konzentrisch angeordnete rohrförmige Filter **9** und **9'** dargestellt, von denen das Filter **9**, das beispielsweise aus einer plissierten Filtermembran besteht, das Filter **9**', das beispielsweise aus einem faserförmigen nichtgewebten Tiefenfilter besteht, umfaßt. Letzteres wird im Innern am Außenumfang des Stützkerns **13** abgestützt.

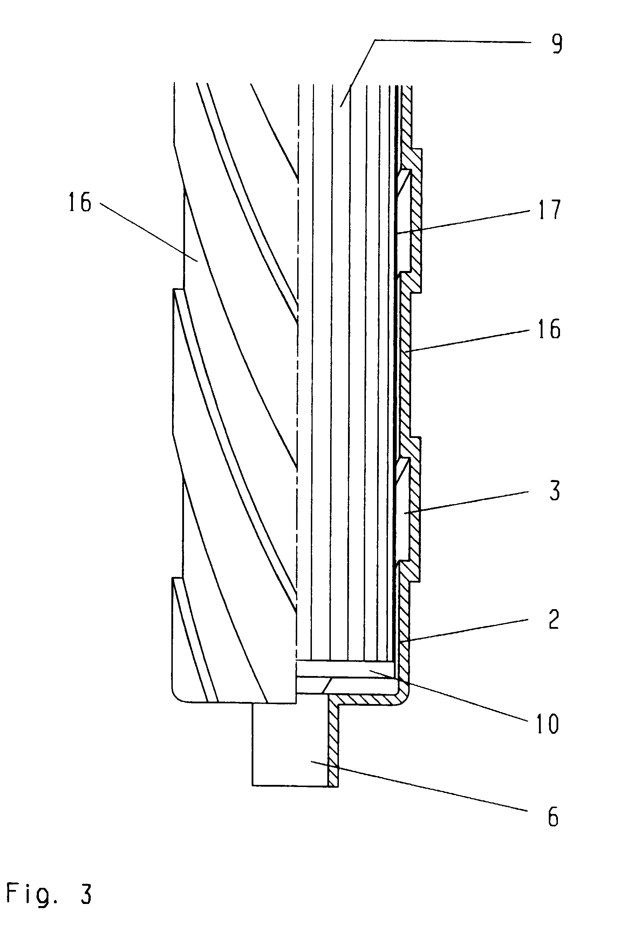

In Fig. 3 sind die an der Innenumfangsseite der Gehäusewand **2** helixartig verlaufenden Strömungskanäle **3** dargestellt. An den Stegen **16** stützen sich die Faltenkanten **17** des plissierten rohrförmigen Filters **9** ab.

## Patentansprüche

1. Filtrationseinheit (1) mit einem patronenartigen Filterelement (5), welches in einem umschließenden Gehäuse angeordnet ist und das Gehäuse in ein- und auslaßseitige Gehäuseräume trennt, wobei das Gehäuse aus zwei über Fluidanschlüsse (6, 7, 8) verfügende und miteinander verbundenen Gehäuseteilen (2, 4) und wobei das patronenartige Filterelement (5) aus einem oder mehreren mindestens einlagig aufgebauten, konzentrisch angeordneten rohrförmigen Filtern (9) besteht, welche an ihren Enden Dichtelemente (10, 11) tragen, die sich quer dazu erstrecken und die Stirnseiten der rohrförmigen Filter (9) fluiddicht einbetten, wobei wenigstens eines der Dichtelemente (10, 11) eine Öffnung (12) besitzt, durch welche sich ein rohrförmiger mit mindestens einem Fluidanschluß (7) in kommunizierender Verbindung stehender Stützkern (13) erstreckt, an dessen Außenumfangsseite sich die rohrförmigen Filter (9) abstützen,
dadurch gekennzeichnet, daß
sich an der Innenumfangsseite der Gehäusewand (2) Strömungskanäle (3) befinden, die mit mindestens einem Fluidanschluß (6) des einen Gehäuseteils (2) in kommunizierender Verbindung stehen und an dessen Stege (16) sich die rohrförmigen Filter (9) abstützen.

2. Filtrationseinheit (1) mit einem patronenartigen Filterelement (9) nach Anspruch 1,
dadurch gekennzeichnet, daß
die Strömungskanäle (3) helixartig an der Innenumfangsseite der Gehäusewand (2) verlaufen.

3. Filtrationseinheit (1) mit einem patronenartigen Filterelement (9) nach den Ansprüchen 1 und 2,
dadurch gekennzeichnet, daß
der Stützkern (13) Bestandteil des einen Gehäuseteils (4) ist, das vorzugsweise als Gehäusedeckel ausgebildeten ist.

4. Filtrationseinheit (1) mit einem patronenartigen Filterelement (9) nach den Ansprüchen 1 bis 3,
dadurch gekennzeichnet, daß
für eine statisch zu betreibende Filtrationseinheit die Summe der Querschnitte der Strömungskanäle (3) gleich dem Querschnitt der mit ihnen in kommunizierender Verbindung stehnden Fluidanschlüsse (6, 8) für die Zufuhr des zu filtrierenden Mediums ist.

5. Filtrationseinheit (1) mit einem patronenartigen Filterelement (9) nach den Ansprüchen 1 bis 3,
dadurch gekennzeichnet, daß
für eine dynamisch zu betreibende Filtrationseinheit (1) die Summe der Querschnitte der Strömungskanäle (3) kleiner ist als der Querschnitt der mit ihnen in kommunizierender Verbindung stehnden Fluidanschlüsse (6, 8) für die Zufuhr des zu filtrierenden Mediums.

6. Filtrationseinheit (1) mit einem patronenartigen Filterelement (9) nach den vorstehendenAnsprüchen,
dadurch gekennzeichnet, daß
die Gehäuseteile (2, 4) und das patronenartige Filterelement (9) Materialkonturen (14, 15, 18) zur Fügung fluiddichter Verbindungen besitzen.

7. Filtrationseinheit (1) mit einem patronenartigen Filterelement (9) nach Anspruch 6,
dadurch gekennzeichnet, daß
sich die Materialkonturen (15, 18) des Gehäusedeckels (4) an seinem Außenumfang und um den Austrittsschaft seines Stützkerns (13) befinden.

## Claims

1. Filtration unit (1) with a cartridge-like filter element (5), which is arranged in an enclosing housing and the housing is divided into inlet-side and outlet-side housing chambers, wherein the housing consists of two interconnected housing parts (2, 4) having fluid connections (6, 7, 8) and wherein the cartridge-like filter element (5) consists of one or more concentrically arranged tubular filters (9) which are of at least single layer construction and which at their ends carry sealing elements (10, 11) which extend transversely thereto and fluid-tightly embed the end faces of the tubular filters (9), wherein at least one of the sealing elements (10, 11) has an opening (12) through which extends a tubular support core (13), which stands in communicating connection with at least one fluid connection (7) and at the outer circumferential side of which the tubular filter (9) is supported, characterised in that disposed at the inner circumferential side of the housing wall (2) are flow channels (3) which stand in communicating connection with at least one fluid connection (6) of one housing part (2) and at the webs (16) of which the tubular filters (9) are supported.

2. Filtration unit (1) with a cartridge-like filter element (9) according to claim 1, characterised in that the flow channels (3) extend helically at the inner circumferential side of the housing wall (2).

3. Filtration unit (1) with a cartridge-like filter element (9) according to claims 1 and 2, characterised in that the support core (13) is a component of one housing part (4), which is preferably constructed as a housing cover.

4. Filtration unit (1) with a cartridge-like filter element (9) according to claims 1 to 3, characterised in that for a filtration unit to be operated statically the sum of the cross-sections of the flow channels (3) is equal to the cross-section of the fluid connections (6, 8), which stand in communicating connection with the channels, for the feed of the medium to be filtered.

5. Filtration unit (1) with a cartridge-like filter element (9) according to claims 1 to 3, characterised in that for a filtration unit to be operated dynamically the sum of the cross-sections of the flow channels (3) is smaller than the cross-section of the fluid connections (6, 8), which stand in communicating connection with the channels, for the feed of the medium to be filtered.

6. Filtration unit (1) with a cartridge-like filter element (9) according to the preceding claims, characterised in that the housing parts (2, 4) and the cartridge-like filter element (9) have material profiles (14, 15, 18) for making available fluid-light connections.

7. Filtration unit (1) with a cartridge-like filter element (9) according to claim 6, characterised in that the material profiles (15, 18) of housing cover (4) are disposed at its outer circumference and around the outlet shaft of its support core (13).

## Revendications

1. Unité de filtration (1) comportant un élément filtrant (5) de type cartouche, qui est disposé dans un corps l'entourant et qui sépare le corps en compartiments d'entrée et de sortie de corps, le corps étant constitué de deux parties (2, 4) de corps reliées entre elles et disposant de raccordements (6, 7, 8) de fluide, et l'élément filtrant (5) de type cartouche d'un ou de plusieurs filtres tubulaires (9) disposés concentriquement, qui sont réalisés en au moins une couche, lesquels portent sur leur extrémités des éléments d'étanchéité (10, 11) qui s'y étendent transversalement, et qui enrobent les faces frontales des filtres tubulaires (9) de façon étanche aux fluides, l'un au moins des éléments d'étanchéité (10, 11) comportant une ouverture (12) à travers laquelle s'étend un noyau de support (13) tubulaire, qui est en liaison de communication avec au moins un raccordement (7) de fluide, sur la face périphérique extérieure duquel prennent appui les filtres tubulaires (9),
caractérisée en ce que
des canaux d'écoulement (3) sont prévus sur la face périphérique intérieure de la paroi (2) de corps, lesquels sont en liaison de communication avec au moins un raccordement (6) de fluide de l'une des parties (2) de corps, et sur les nervures (16) desquels prennent appui les filtres tubulaires (9).

2. Unité de filtration (1) comportant un élément filtrant (9) de type cartouche selon la revendication 1,
caractérisée en ce que
les canaux d'écoulement (3) s'étendent de façon hélicoïdale sur la face périphérique intérieure de la paroi (2) de corps.

3. Unité de filtration (1) comportant un élément filtrant (9) de type cartouche selon les revendications 1 et 2,
caractérisée en ce que
le noyau de support (13) fait partie intégrante de l'une des parties (4) de corps, qui est de préférence réalisée en tant que couvercle de corps.

4. Unité de filtration (1) comportant un élément filtrant (9) de type cartouche selon les revendications 1 à 3,
caractérisée en ce que,
pour une unité de filtration devant fonctionner de façon statique, la somme des sections transversales des canaux d'écoulement (3) est égale à la section transversale des raccordements (6, 8) de fluide qui sont en liaison de communication avec eux pour l'amenée du fluide à filtrer.

5. Unité de filtration (1) comportant un élément filtrant (9) de type cartouche selon les revendications 1 à 3,
caractérisée en ce que,
pour une unité de filtration (1) devant fonctionner de façon dynamique, la somme des sections transversales des canaux d'écoulement (3) est inférieure à la section transversale des raccordements (6, 8) de fluide qui sont en liaison de communication avec eux pour l'amenée du fluide à filtrer.

6. Unité de filtration (1) comportant un élément filtrant (9) de type cartouche selon les revendications précédentes,
caractérisée en ce que
les parties (2, 4) de corps et l'élément filtrant (9) de type cartouche comportent des contours de matériau (14, 15, 18) pour l'établissement de liaisons étanches aux fluides.

7. Unité de filtration (1) comportant un élément filtrant (9) de type cartouche selon la revendications 6,
caractérisée en ce que
les contours de matériau (15, 18) du couvercle (4) de corps sont situés sur sa périphérie extérieure et autour de l'orifice de sortie de son noyau de support (13).
